# EUROPEAN PATENT SPECIFICATION

(11) **EP 4 352 483 B1**
(45) Date of publication and mention of the grant of the patent: **29.01.2025**
(21) Application number: 22732224.5
(22) Date of filing: 09.06.2022
(51) Int. Cl.: G01N 1/08, G01N 1/04, G01N 1/28

(54) **APPARATUS COMPRISING AN INTERFACE FOR DETACHABLE COUPLING OF A DISSECTION TOOL**
VORRICHTUNG MIT EINER SCHNITTSTELLE ZUR LÖSBAREN KOPPLUNG EINES SEZIERWERKZEUGS
APPAREIL COMPRENANT UNE INTERFACE DE COUPLAGE AMOVIBLE D'UN OUTIL DE DISSECTION

(30) Priority: 11.06.2021 EP 21178992
(43) Date of publication of application: 17.04.2024
(73) Proprietor: Xyall B.V., 5633 AJ Eindhoven (NL)
(72) Inventor: VAN TUIJL, Martijn, 5706 ST Helmond (NL); WIMBERGER-FRIEDL, Reinhold, 5633 AJ Eindhoven (NL)
(74) Representative: DeltaPatents B.V.
(86) International application number: PCT/EP2022/065711
(87) International publication number: WO 2022/258760

(56) References cited:
- EP-A1- 2 732 877
- DE-A1- 19 917 855
- US-A1- 2019 390 252
- US-B2- 10 866 170

## Description

### FIELD OF THE INVENTION

The invention relates to an apparatus for automated dissection of biological material disposed on a planar substrate, such as a glass slide, and is more particularly directed to an interface of the apparatus and a method for automated attachment and detachment of a dissection tool.

### BACKGROUND ART

To perform a molecular analysis of a tumor, for the purposes of oncology diagnostics, a certain amount and concentration of tumor cells must be present in the sample to be analyzed. Tumor tissue is heterogenous and contains other tissue and cell types. Therefore, a region of interest (ROI) is typically defined as the sample to be dissected from a thin section of tissue disposed on a microscope slide. Manual methods of dissection are most common, in which a lab technician scrapes material from the ROI using e.g. a scalpel blade and transfers the scraped material into a collection tube.

An example of an automated device for extracting material from a biological sample via milling is disclosed in US 10876933. The device comprises a head assembly and a stage that can accommodate and collect samples from several tissue slides and enables automated filling and uploading of several milling tips into a plurality of corresponding sample collection vials. The stage includes a plurality of receptacles adapted to receive a corresponding number of spring-loaded milling tip holders, which are used for automatic loading of the milling tips by the head assembly. The stage further accommodates a fill station for filling the milling tips with a buffer solution. In an embodiment, the stage supports a tray into which receptacles are formed for receiving the spring-loaded milling tip holders and sample collection vials. When a milling tip is securely seated in the corresponding holder, a threaded section of the milling tip can be threaded to the head assembly and automatically moved to the fill station for filling with buffer solution. After dissection, the used milling tip can then be reloaded into a holder or discarded to avoid cross-contamination.

A further example of such an automated device having an interchangeable milling tip is known from US 10866170.

In the field of liquid handling devices, in which a single pipette tip or an array of pipette tips is attached to a plunger mechanism for dispensing a metered amount of liquid into e.g. a microwell plate, automated methods of pick-up and detachment are generally applied. US 2019/0314808, for example, discloses a device with an array of attachments that extend through an ejector plate. The device is configured to pick up a corresponding array of disposable tips by pressing the attachments into an opening in the pipette tip. After use, the ejector plate is driven by a mechanical actuator and is moved downward to push off the attached tips.

DE 19917855 discloses a device in which a lever is activated in order to push off a single pipette. The device is equipped with an electromagnet that is energized in order to pull up one end of the lever arm.

There is still room for improvement in terms of defining an apparatus for automated dissection of biological material that allows a dissection tool to be attached and detached from a movable head in a straightforward automated manner.

### SUMMARY OF THE INVENTION

In a first aspect, the invention relates to an apparatus according to claim 1 for automated dissection of biological material from a tissue sample disposed on e.g. a glass slide, which comprises an interface for releasable attachment of a disposable dissection tool. The tool is attachable to the interface via at least one push fitting and is rotatable about a vertical rotation axis.

To permit disengagement of the tool, the interface is equipped with one or more lever arms, each pivotably connected to a housing of the interface about a horizontal pivot axis and arranged at a radially outer location relative to the at least one push fitting. Each lever arm has first and second engagement surfaces at first and second ends thereof, whereby the first engagement surface is generally located at a greater radial distance from the vertical rotation axis than the second engagement surface. The tool has an upper collar, which in attached condition preferably bears against an underside of the interface housing. According to the invention, the tool upper collar and the one or more lever arms are configured such that when the tool is in attached condition, the first engagement surface of each lever arm lies radially outside of the outer collar, and such that the second engagement surface will make contact with and exert a disengaging force on an upper surface of the tool collar when the first end of each lever arm is displaced in upward direction by a sufficient amount.

Furthermore, the apparatus is configured to detach the tool simply by lowering the interface relative to a surface that surrounds an opening of sufficient depth to receive a main body of the tool. The upward displacement of each lever arm is effected by contact between said surrounding surface and each lever first engagement surface. An apparatus in accordance with the invention therefore enables automated detachment in a straightforward manner, via the application of relatively low force.

In order to perform high-precision dissection, it important for the tool to be attached with precise alignment. The attachment between the tool and the interface therefore preferably comprises one or more conical connections. The interface may comprise a number of conical pins that engage in corresponding conical recesses provided at an upper end of the tool. Alternatively, the tool may comprise a number of conical pins that engage in corresponding conical recesses in the housing.

The push fitting that provides a locking force between the tool and the interface may be achieved via an interference fit between the one or more conical connections. In other embodiments, the locking force is mainly provided via a snap-fit connection.

In a preferred embodiment, the interface comprises one central conical protrusion that extends from an underside of the interface housing and the tool comprises a central conical recess that is surrounded by the upper collar. The tool may be provided with a number of snap-fit joints arranged at an entrance to the conical recess and the interface protrusion may be provided with an annular ridge that engages in the snap-fit joints when the protrusion is pushed into the recess.

As will be understood, the one or more lever arms on the interface are adapted to exert a force that is greater than the locking force between the tool and the interface.

To ensure sufficient lever force, the interface may be provided with at least two lever arms arranged with an even angular spacing relative to the vertical rotation axis. In a preferred embodiment, the interface comprises three lever arms.

Suitably, the pivot axis of each lever arm is located farther from the first end than the second end, to maximise the effective length of the lever. Furthermore, when each lever arm is in a rest position, the first engagement surface preferably lies in a first horizontal plane that is lower than a generally horizontal plane of the housing underside. In a preferred embodiment, the first end of each lever arm comprises a vertical extension and the housing underside comprises a suitable opening through which it extends. When the tool is attached, the vertical extension and first engagement surface then lies below the upper surface of the tool collar.

The corresponding second engagement surface of each lever arm is located in a second horizontal plane, which preferably lies relatively higher than the first when the lever arm is in a non-activated position. The second engagement surface may lie in the same plane as the underside of the housing, or somewhat higher. To permit the second engagement surface of each lever arm to extend beneath the housing underside when the first end of the lever is activated, a further opening is provided, or a longitudinal slot may be provided in the underside that permits both ends of the relevant lever to protrude.

As mentioned above, activation of the levers is possible via a downward movement of the tool and the application of a relatively low force. The downward movement can also be used to pick up a tool.

The apparatus of the invention suitably comprises an assembly of actuators that are used to move the tool from a tool docking and undocking station to a dissection station, where the slides comprising e.g. thin sections of paraffin-embedded tumour tissue are located, and to perform the X- and Y-translations and rotational movements needed to dissect material from an identified region of interest. To enable high-speed and high-precision dissection, it is advantageous to minimise the weight of the actuator assembly. The tool interface of the invention permits the use of a lightweight and compact actuator for performing the movements needed to dock and undock a dissection tool. Suitably, the interface is fixed connection with a rotary actuator that enables the interface and attached tool to be rotated about the vertical rotation axis and with a linear actuator that permits movement of the interface and tool in vertical direction. The rotary actuator and the linear actuator are also used during dissection to control an orientation of the blade and to bring the scraping blade into contact with the glass slide with a controlled downward force.

A stack of linear actuators may be used, which are in connection with each other, comprising an x-stage, a y-stage for the translational motions during dissection and a z-stage for the vertical motions. In a preferred embodiment, the rotary actuator is connected to the z-stage. The rotary actuator may comprise a stepper motor or a linear drive motor with a hollow axis for allowing a pneumatic connection with the interface and tool, such that suction may be applied during dissection. The z-stage may comprise a hinge bearing for position control, to ensure a constant and precise downward force during dissection. Alternatively, the z-stage may be equipped with a force feedback control to maintain the downward force at a desired level.

The apparatus comprises a tool carrier having a main recess that is shaped to receive a dissection tool as described above. The main recess is surrounded by an upper surface which contains a number of relatively higher portions and a number of relatively lower portions, at least equal to the number of lever arms of the tool interface. When the tool interface is in a first angular position, being a pick-up position, the position of the relatively lower portions coincides with the position of the first engagement surface of each lever arm. In one example, the relatively higher portions of the carrier surface are formed by essentially flat sections and the relatively lower portions are formed by indentations in alignment with each first engagement surface.

Preferably, the apparatus comprises a tray containing a plurality of such tool carriers for receiving a plurality of dissection tools. In an embodiment, the apparatus comprises a number of such trays arranged on moveable carriers for automated insertion and removal of the trays.

Consequently, a tool can be picked up by lowering the interface relative to a tool held in a tool carrier by an amount sufficient to engage the at least one push fitting, without engaging the first end of each lever arm.

After dissection, the tool may be disposed of in a separate receptacle with an opening of suitable diameter such that the first end each lever arm is activated when the tool is lowered into the opening and makes contact with the surrounding surface.

In a preferred embodiment, the apparatus is configured to deposit a used tool back into the same carrier. To enable this, the actuator rotates the interface to a second angular position, being a position in which the first end of each lever arm is in alignment with the aforementioned relatively higher portions of the carrier surface, such that lowering the tool into the shaped recess of the carrier brings the first end of each lever arm into contact therewith, causing it to pivot and displace the second end, which releases the tool from the interface.

Thus, docking and undocking of a dissection tool can be performed in an automated manner that requires the application of minimal force.

In a preferred embodiment, an apparatus for dissection according to the invention is configured for use in conjunction with suction. The tool then comprises an internal passageway that extends through the tool in vertical direction and has an orifice at one end where a scraping blade is arranged. The scraping blade is preferably made of a metal having a high yield stress. An air-permeable filter element is arranged in the internal passageway and a section of the internal passageway between the filter element and the orifice serves as a suction nozzle.

The interface housing is similarly provided with an internal passageway that extends in vertical direction through the interface and which connects with the tool internal passage in an airtight manner when the tool is in attached condition. In the preferred embodiment where the interface comprises a central conical protrusion and the tool comprises a central conical recess, the housing internal passageway extends through the conical protrusion and engagement with the tool conical recess provides the airtight connection. In other embodiments, a seal may be provided at the connection between the interface internal passageway and the tool internal passageway.

The internal passageway of the interface is connectable via suitable tubing and optional valves to a vacuum generator, such that during dissection, an underpressure is generated an attachment end of the dissection tool. This creates an uplifting airstream at the tool orifice, which suctions material dissected by the scraping blade into the nozzle, where it is held at an underside of the filter element.

The apparatus may suitably comprise a further station where collection tubes are held. After use, the dissected material can be ejected straight into a collection tube, by applying a pressure pulse, thereby minimising the risk of contamination. The tool is then disposed of into a waste receptacle or is returned to the docking/undocking station where it is deposited in a tool carrier and a fresh tool is picked up in the manner described above.

In a further aspect, the interface comprises:
- an internal passageway that extends through the interface in vertical direction, said passageway having a vertical centreline, whereby one end of the passageway comprising a fitting for airtight connection with a vacuum generator and an opposite end of the internal passageway comprises means for enabling an airtight connection with an internal passageway of the tool; and
- means for enabling mechanical connection of the tool via at least one push fitting. In accordance with the invention, the interface further comprises one or more lever arms each pivotably connected to a housing of the interface via a horizontal pivot axis (135), whereby:
   - each lever arm is arranged at a radially outer location relative to the means for enabling a push fitting; and
   - each lever arm has first and second ends with respective first and second engagement surfaces, whereby the first engagement surface is arranged at a greater radial distance from the vertical centreline than the second engagement surface.

In a preferred embodiment, the first engagement surface of each lever arm generally lies in a first horizonal plane, and the corresponding second engagement surface is generally arranged in a second horizonal plane which lies upward of the first horizonal plane.

In an advantageous further development, the means for enabling a push fitting and the means for enabling an airtight connection with the tool comprise a hollow, central conical protrusion that extends from an underside of the housing. As described above, an outer surface of the central conical protrusion may comprise an annular ridge, at a location between the underside of the housing and a conically shaped end portion of the protrusion. The annular ridge forms part of the push fitting and is adapted for snap-fit engagement with the tool.

In a still further aspect, the invention relates to a method of detaching a dissection tool from an apparatus according to claim 13, the apparatus comprising a tool interface as defined above, whereby the tool is attached to the interface via at least one push fitting. The method of attachment includes a step of:
- vertical movement of the interface relative to a tool carrier having a recess which holds a body of the dissection tool and is surrounded by an upper surface having a number of relatively higher portions and relatively lower portions, at least equal to the number of lever arms of the tool interface, whereby
   - the position of the relatively lower portions coincides with the position of the first engagement surface of each lever arm when the interface is in a first angular position;
   - the vertical movement is sufficient to engage the at least one push fitting; and
   - the depth of the relatively lower portions is such that engagement of the push fitting occurs without being affected by contact between the first engagement surface of each lever arm and the tool carrier.

The method of detachment includes a step of:
- lowering the interface relative to a surface that surrounds an opening of sufficient depth to receive a main body of the tool, whereby the opening is sized such that displacement of each lever arm is effected by contact between said surrounding surface and the first engagement surface of each lever arm.

In an embodiment, the method of detachment comprises returning a tool to the same tool carrier and includes a further step of:
- rotating the tool interface and attached tool about the vertical axis, free from load, to a second angular position in which the first engagement surface of each lever arm is in alignment with the relatively higher portions of the carrier surface; and
- the step of lowering comprises vertical movement of the interface relative to the tool carrier, so as to bring the first engagement surface of each lever arm into contact with the relatively higher potions of the tool carrier upper surface and cause each lever arm to pivot, such that the corresponding second engagement surface is displaced against an upper surface of the tool and disengages the at least one push fitting.

It will be appreciated by those skilled in the art that two or more of the above-mentioned embodiments, implementations, and/or aspects of the invention may be combined in any way deemed useful.

### BRIEF DESCRIPTION OF THE DRAWINGS

The invention will now be further elucidated with reference to the embodiments described hereinafter. In the drawings,
- Fig. 1a: schematically shows a cut view of a dissection tool attached to a tool interface of an apparatus according to an embodiment of the invention;
- Fig. 1b: is a perspective view of an underside of the tool interface depicted in Fig. 1a;
- Fig. 1c: is a cross-sectional view of an example of a dissection tool;
- Fig. 2: shows a front view of the dissection tool from Fig. 1c attached to the tool interface, with part of a housing of the interface cut away to reveal a lever arm of the interface;
- Fig. 3a: is a perspective view of part of a tray comprising a number of tool carriers which are shaped to hold the dissection tool shown in Fig. 1c and Fig. 2;.
- Fig. 3b: shows a top view of two adjacent tool carriers;
- Fig. 4: shows a partially cut side view of the tool interface in a first position where it has been lowered into a tool carrier for picking up a dissection tool;
- Fig. 5a: shows a partially cut front view of the interface housing, with attached tool, in a second position where the tool has been lowered into the tool carrier such that the depicted lever arm makes contact with an upper surface of the tool carrier;
- Fig. 5b: shows the arrangement depicted in Fig. 5a when the interface has been lowered by a further amount, so as to displace the depicted lever arm.

It should be noted that items which have the same reference numbers in different figures, have the same structural features and the same functions. Where the function and/or structure of such an item has been explained, there is no necessity for repeated explanation thereof in the detailed description.

### DETAILED DESCRIPTION OF EMBODIMENTS

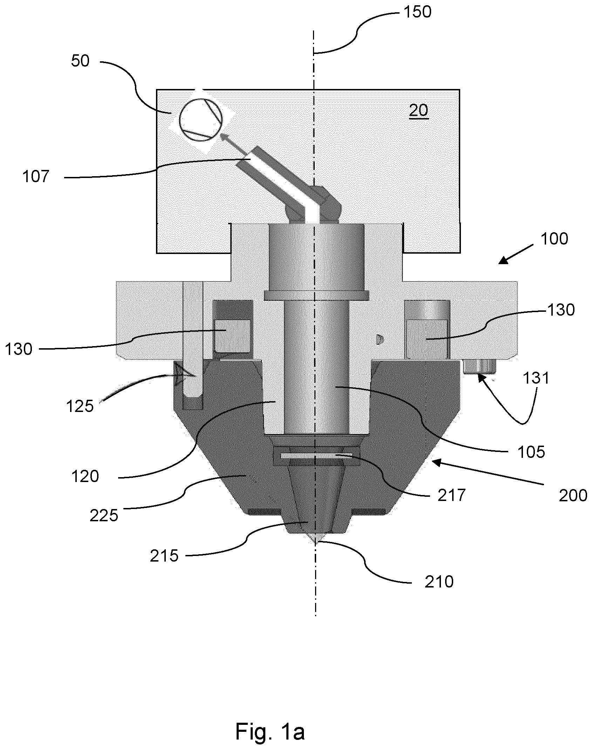

Fig. 1a schematically shows a cut view of a dissection tool 200 attached to a tool interface 100 which form part of a dissection apparatus according to an embodiment of the invention. A first end of the dissection tool comprises a blade 210 for scraping off biological material from a tissue sample disposed on a slide. The apparatus further comprises an actuator 20 to which the tool interface 100 is fixed, which forms part of an assembly of actuators which are suitably controlled and moved in order to bring the scraping blade 210 into contact with a slide surface and detach biological material from an identified region of interest ROI of a tissue sample. The actuator 20 is movable in vertical direction and permits rotation about a vertical axis 150 and is used both during dissection and for automated attachment and detachment of the dissection tool, which will be explained in detail later.

The depicted dissection tool is adapted to work in combination with suction. The tool thus comprises a nozzle 215 having an orifice where the blade 210 is arranged and an internal passageway that extends through the tool and connects with an internal passageway 105 through the tool interface 100. The internal passageways are connectable to a vacuum generator 50, via suitable tubing 107, so that during use of the tool, biological material dissected by the blade 210 is suctioned into the nozzle 215, where it is caught at the underside of an air-permeable filter element 217 arranged to span the tool internal passageway. The tool 200 is designed for single use.

At the end of the dissection process, the tool 200 must be detached from the interface 100. To enable high-resolution and high-precision dissection at relatively high speed, it is important that the actuator 20 is lightweight and compact. To facilitate efficient automated processing of multiple tissue samples, it is advantageous if the tool 200 can be detached from the interface 100 and a new tool attached in an automated manner that does not add to the complexity and the weight of the assembly of actuators. The attachment interface 100 of the invention is thus designed to enable precise, stable and airtight attachment of the tool 200, followed by detachment, in a straightforward, automated manner that requires the actuator 20 to exert minimal force.

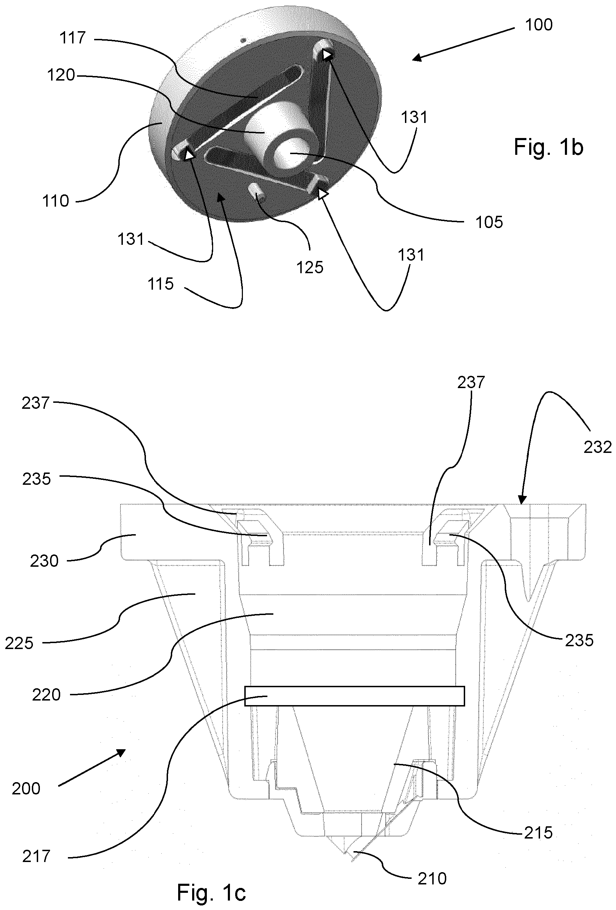

This will be explained also with reference to Fig. 1b, which shows a perspective view of the underside of the inventive tool interface 100 and Fig. 1c, which shows a cross-sectional view of the dissection tool 200.

The interface 100 comprises a housing 110 which has a generally planar underside 115 from which a central conical protrusion 120 extends. The protrusion 120 is hollow and forms part of the internal passageway 105 explained above. A body 225 of the tool comprises a corresponding conical recess 220. The conical protrusion 120 and the conical recess 220 have a common centre axis, which coincides with the vertical rotation axis 150 (refer Fig. 1a). This provides a self-aligning, airtight connection between the tool and the interface. Additionally, the interface may comprise an alignment pin 125 that fits into a corresponding hole that extends into the tool body 225. The geometry of the interface and the tool thus enables the tool to be attached with a precise location, which is necessary to enable the blade 210 to perform high-precision dissection.

In some embodiments, the locking force between the tool and the interface is realized via a press fit between the conical protrusion 120 and the conical recess 220. Alternatively, the locking force may be provided via a snap-fit connection. The conical protrusion 220 may comprise an annular ridge (not shown) which engages with snap-fit joints on the tool.

As shown in Fig. 1c, the tool 200 comprises an upper collar 230 having an essentially flat upper surface 232, which surrounds an entrance to the conical recess 220. A number of snap-fit joints 235 - three in the depicted embodiment - are provided at the entrance to the conical recess, which engage with the annular ridge on the conical protrusion 120 when the interface protrusion is pushed into the tool recess. In the depicted example, the snap-fit joints are cantilever arms that extend within a corresponding indentation 237 in the tool body 225 at the entrance to the conical recess 220. A gap between each arm 235 and a radially outer wall of the indentation 237 permits flexure of the arm needed for engagement and disengagement with the annular ridge on the interface conical protrusion 220. Suitably, the snap fit joints 235 are arranged at even angular intervals around the entrance to the conical recess 220 and are adapted to provide a stable locking force that is sufficiently large to enable precise dissection using the tool, yet small enough to permit relatively low-force disengagement.

To enable detachment of the tool, the interface is provided with at least one lever arm that is pivotably connected to the interface 100 about a horizontal pivot axis and is moveable within the interface housing 110. In a preferred embodiment, the interface comprises three lever arms 130 which are arranged within the housing, at a radially outer location relative to the conical protrusion 120. A first end of each lever arm has a first engagement surface 131 that extends beyond the generally planar underside 115 of the housing 110. A second end of each lever arm has a second engagement surface (not visible in Fig. 1b) which can extend beyond the housing underside 115 when the lever arm is pivoted. As shown, the housing underside may comprise slots 117 that permit protrusion of the first and second engagement surface of each lever arm beyond the housing underside.

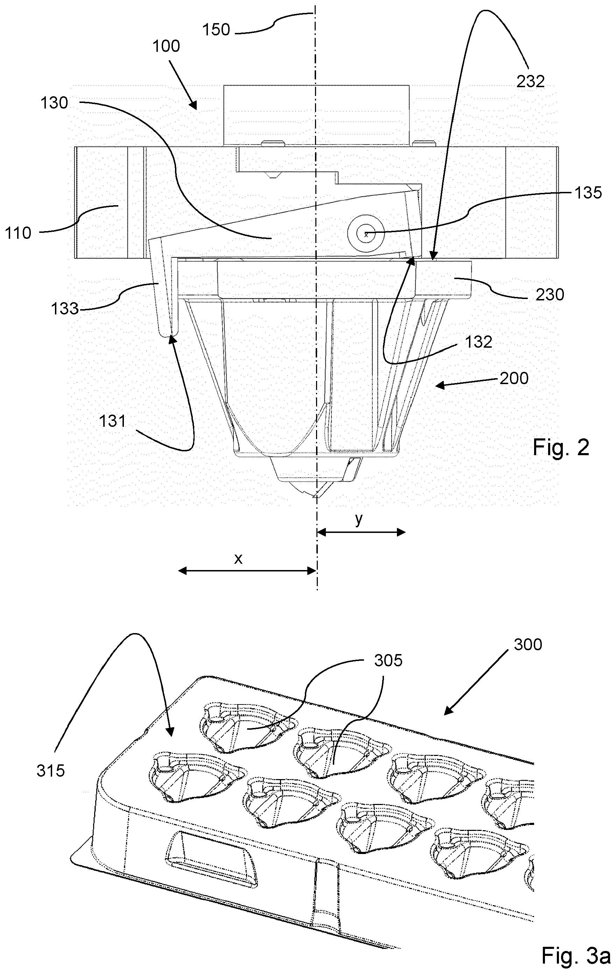

The process of tool detachment will be explained further with reference to Fig. 2, which shows a side view of the tool 200 attached to the interface 100, whereby part of the housing 110 is cut away to show one of the three lever arms 130. The lever arm is pivotable about pivot axis 135, which axis is located closer to the second end of the lever arm than the first end. Furthermore, the first end of the lever arm has a vertical extension 133, which is generally located at a radial distance x, relative to the centre axis 150 of the interface conical protrusion, whereby x is larger than an outer radius of the tool upper collar 230. The vertical extension 133 thus lies radially outside of the tool upper collar 230 such the first engagement surface 131 makes no contact with the tool. Suitably, the vertical extension 133 is sufficiently long to extend beyond an underside of the tool collar 230.

The second end of the pivot arm is generally located at a shorter radial distance y relative to the centre axis 150 than the first end of the lever arm. The distance y is such that when the tool is in attached condition, the second engagement surface 132 of the lever arm 130 lies above the upper surface 232 of the upper collar 230. The second engagement surface may be in contact with the collar upper surface or there may be a small gap. Displacement of the first engagement surface 131 of the lever arm 130 in an upward direction brings the second engagement surface 132 into contact with the collar upper surface 232 and exerts a force on the tool. Suitably the lever force exerted by the three lever arms is sufficient to overcome the locking force between the tool and the interface. In the embodiment where the tool is secured to the interface via snap fit joints, the combined lever force pushes the tool out of the engaged locking position.

In an embodiment, the tool is deposited into a tool carrier tray 300, an example of which is shown in Fig. 3a. The tray comprises a number of tool carriers each of which comprises a recess 305 that is shaped to receive a tool body. Preferably, a tool is picked up from a tool carrier and replaced in the same carrier after use.

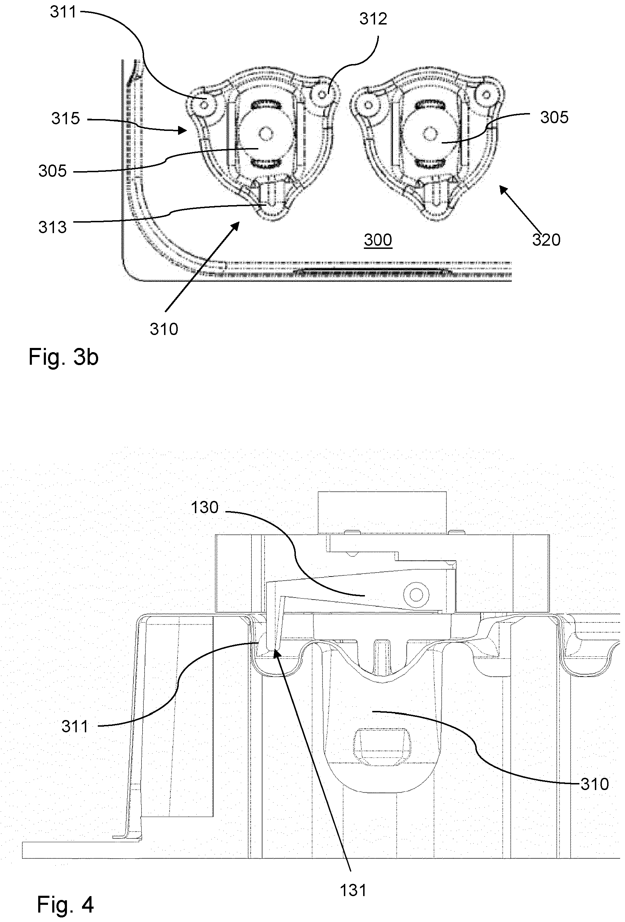

Fig. 3b shows a top view of two adjacent tool carriers 310, 320 in the carrier tray 300. Each tool carrier comprises an identically shaped main recess 305 for accommodating a tool. In the depicted example, each carrier is shaped such that when a tool is held therein, the upper surface 232 of the tool upper collar does not protrude beyond an upper surface 315 of the tray. Each carrier further comprises three indentations 311, 312, 313 relative to the tray upper surface 315, which are located radially outwards of the main recess 305 and which are adapted to the receive the first engagement surface 131 of each lever arm 130 of the tool interface 100. Let us assume that the interface will pick up a tool arranged in the first carrier 310.

The actuator lowers the conical protrusion of the interface into the first carrier 310, when the interface 100 is in a first angular position, being a pickup position in which the first engagement surface 131 of each lever arm is in alignment with the corresponding indentations 311, 312, 313 in the carrier.

Fig. 4 shows the tool interface 100 after it has been lowered into the first carrier 310 for picking up a tool. The conical protrusion of the tool interface 100 can be lowered into the first carrier 310 without engagement of the lever arm 130 because the first engagement surface 131 is in alignment with the first indentation 311 of the first carrier 310. Similarly, the first engagement surface of the second and third lever arms are in alignment with the second and third indentations 312, 313 respectively. As will be understood, the indentations have a sufficient depth to enable the conical protrusion 120 to be lowered until the annular ridge engages with the snap joints 235 at the entrance to the tool conical recess 220. Downward movement of the actuator and the application of a relatively small force is thus sufficient to mechanically connect the tool to the interface. Preferably, the tray of carriers is able to flex somewhat, such that the tool can be displaced in the X-Y plane while being held in the recess 305, to enhance alignment.

After dissection using the tool, it may be deposited back into the first carrier 310. The actuator rotates the interface 100 about the vertical axis 150 to a second angular position, in which the first engagement surface of each lever arm is out of alignment with the indentations and will make contact with the upper surface 315 of the tray. In the depicted embodiment, the second angular position is a half turn from the first angular position, given that the tool body, and shaped recess 305, has two degrees of rotational symmetry. Other configurations are of course possible.

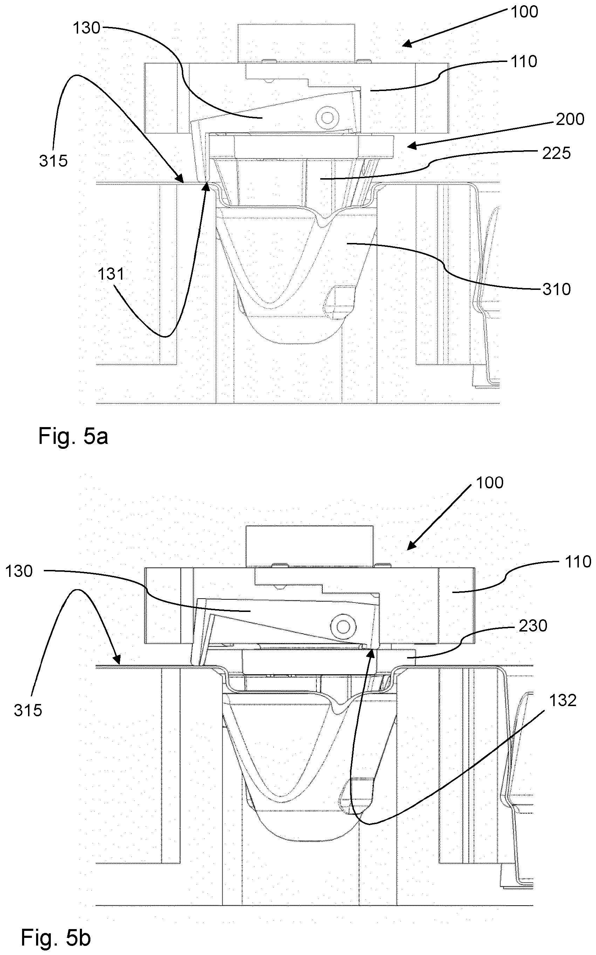

The detachment process is evident from Figures 5a and 5b, which show the tool being lowered into the first tool carrier 310 of the tool carrier tray 300. After rotation to the second angular position, the actuator moves the interface 100 and tool 200 downward towards the tray, which is now positioned relative to the tool such that the tool body 225 is inserted into the shaped recess of the tool carrier 310 and the first engagement surface 131 of the lever arm 130 now makes contact with the tray upper surface 315, as shown in Fig 5a. Further downward movement causes the first end of the lever arm to be displaced upwards within the interface housing 110 as shown in Fig. 5b and the second engagement surface 132 of the lever arm is displaced to exert a releasing force on the tool collar 230, which disengages the snap-fit connection as explained above. When the tool has been released, the actuator raises the interface 100 until the conical protrusion 120 is above the tray and can be moved to pick up a new tool that is arranged in an adjacent tool carrier of the carrier tray.

Thus, the only necessary actions of the actuator 20 to perform automated tool pickup and depositing are rotation about a vertical axis, free from load, and downward movement involving the application of low force. This can be achieved using a compact and lightweight actuator.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

### Reference numerals

- 20: actuator
- 50: vacuum generator
- 100: tool interface
- 105: internal passageway through tool interface
- 107: tubing for connecting internal passageway to the vacuum generator
- 110: interface housing
- 115: planar underside of interface housing
- 117: longitudinal slot in interface housing
- 120: central conical protrusion of interface
- 125: alignment pin
- 130: lever arm
- 131: first engagement surface at first end of lever arm
- 132: second engagement surface at second end of lever arm
- 133: vertical extension at first end of lever arm
- 135: pivot axis of lever arm
- 150: centre axis of conical protrusion (and vertical rotation axis of actuator)
- x: radial distance of first engagement surface from centre axis of conical protrusion
- y: radial distance of second engagement surface from the centre axis
- 200: dissection tool
- 210: scraping blade at first end of dissection tool
- 215: suction nozzle of dissection tool
- 217: air-permeable filter element
- 220: conical recess of dissection tool
- 225: tool body
- 230: upper collar at second end of the tool
- 232: upper surface of the tool upper collar
- 235: snap-fit joint
- 237: indentation in tool body from which snap-fit joint extends
- 300: tool carrier tray
- 305: shaped recess of tool carrier
- 310: first tool carrier
- 311, 312, 312 1^{st}, 2^{nd} and 3^{rd}: indentations of first tool carrier
- 315: upper surface of tool carrier tray
- 320: second tool carrier

## Claims

1. Apparatus for dissecting biological material from a sample disposed on a planar substrate, comprising a tool interface (100) for releasable attachment of a dissection tool (200) that is connectable to the interface via at least one push fitting (120, 220) and is rotatable about a vertical rotation axis (150), further comprising an actuator (20) in fixed connection with the interface (100), wherein the actuator (20) is moveable in vertical direction and is rotatable between a first angular position and a second angular position about the vertical rotation axis (150); **characterised in that** the interface (100) further comprises one or more lever arms (130) each pivotably connected to a housing (110) of the interface via a horizontal pivot axis (135), whereby:
• each lever arm (130) is arranged at a radially outer location relative to the at least one push fitting and has first and second ends with respective first and second engagement surfaces (131, 132), the first engagement surface (131) being arranged at a greater radial distance from the vertical axis (150) than the second engagement surface (132); and
• the tool (200) has an upper collar (230) which is dimensioned such that when the tool is attached to the interface (100), the first engagement surface (131) of each lever arm (130) lies outside of an outer dimension of the upper collar and makes no contact therewith, and is further dimensioned such that the second engagement surface (132) of each lever arm will make contact with an upper surface (232) of the collar when the first end of the lever am is displaced in upward direction;
and **in that**
• the apparatus further comprises a receptacle (310) having an opening (305) of sufficient depth to accommodate a main body (225) of the tool, and is configured to detach the tool by lowering the interface (100) towards the opening until the first engagement surface (131) of each lever arm makes contact with a surface (315) that surrounds the opening and is displaced in upward direction, causing each lever arm to pivot such that the corresponding second engagement surface (132) is displaced against the upper surface (232) of the tool and exerts a force on the collar (230) that disengages the at least one push fitting.

2. Apparatus according to claim 1, wherein the receptacle is a tool carrier (310) having a main recess (305) that is shaped to accommodate the main body (225) of the dissection tool (200) and an upper surface (315) surrounding the main recess, whereby:
• the carrier upper surface includes a number of relatively higher portions and relatively lower portions (311, 312, 313) at least equal to the number of lever arms (130) of the tool interface; and
• the position of the relatively lower portions coincides with the position of the first engagement surface (131) of each lever arm when the interface is in the first angular position.

3. Apparatus according to claim 2, comprising a tray (300) in which a plurality of tool carriers (310, 320) are incorporated for holding a plurality of dissection tools.

4. Apparatus according to claim 2 or 3, wherein the apparatus is further configured to attach a dissection tool (200) arranged in a tool carrier (310) when the interface is in the first angular position by moving the interface downwards relative to the tool carrier (310) until the at least one push fitting engages, whereby a depth of the relatively lower portions (311, 312, 313) is such that this engagement occurs without being affected by contact between the first engagement surface (131) of each lever arm (130) and the tool carrier (310).

5. Apparatus according to claim 4, wherein after use of a tool, the apparatus is further configured to return the tool to the tool carrier (310) and detach the tool from the interface (100) by:
• rotating the interface to the second angular position, being a position in which the first engagement of surface (131) of each lever arm is in alignment with the relatively higher portions of the carrier upper surface (315); and
• lowering the tool into the tool carrier (310) by an amount sufficient to bring the first engagement surface (131) of each lever arm into contact with the relatively higher portions of the carrier upper surface (315) and cause each arm to pivot, such that displacement of the second engagement surface (132) against the tool collar surface (232) exerts a force sufficient to disengage the at least one push fitting.

6. Apparatus according to any preceding claim, wherein the at least one push fitting is at least partly formed by a snap-fit connection between the interface (100) and the tool (200).

7. Apparatus according to claim any preceding claim, wherein:
• the interface (100) comprises one or more conical protrusions (120) that extend from an underside (115) of the housing (110);
• the tool (100) comprises one or more conical recesses (220) that are shaped to receive the one or more conical protrusions, and
• the at least one push fitting is at least partly formed by the one more conical protrusions (120) engaging in the corresponding conical recesses (220).

8. Apparatus according to claim 7, wherein the one or more conical protrusions (120) comprise an annular ridge and an entrance to the one or more tool conical recesses (220) is provided with one or more snap-fit joints (235) which engage with the annular ridge when an end section of the conical protrusion is pushed into the corresponding conical recess.

9. Apparatus according to claim 7 or 8, wherein the interface (100) comprises a central conical protrusion (120) that is adapted to engage in a central conical recess (220) of the tool (200).

10. Apparatus according to any preceding claim, wherein:
• the interface (100) comprises an internal passageway (105) that extends through the interface in vertical direction and is provided with a fitting for enabling an airtight connection with a vacuum generator (50),
• the tool (200) comprises an internal passageway that extends through the tool in vertical direction, and
• when the tool is in attached condition, said internal passageways of the tool and the interface are connected in an airtight manner.

11. Apparatus according to any preceding claim, wherein:
the interface comprises two or more lever arms arranged with an even angular spacing around the vertical axis (150).

12. Apparatus according to any preceding claim, wherein in a rest position, the first engagement surface (131) of each lever arm lies in a first horizonal plane, and the corresponding second engagement surface (132) lies in a second horizonal plane which is higher than the first horizonal plane.

13. Method of detaching a dissection tool (200) from a tool interface (100) of a dissection apparatus, whereby the dissection tool is attached to the tool interface via at least one push fitting, and wherein:
• the apparatus comprises an actuator (20) in fixed connection with the tool interface (100), wherein the actuator (20) is moveable in vertical direction and is rotatable between a first angular position and a second angular position about a vertical rotation axis (150);
• the tool interface (100) comprises one or more lever arms (130) each pivotably connected to a housing (110) of the interface via a horizontal pivot axis (135);
• each lever arm (130) is arranged at a radially outer location relative to the at least one push fitting and has first and second ends with respective first and second engagement surfaces (131, 132), the first engagement surface (131) being arranged at a greater radial distance from the vertical axis (150) than the second engagement surface (132);
• the tool (200) has an upper collar which is dimensioned such that when the tool is attached to the interface (100), the first engagement surface (131) of each lever arm (130) lies outside of an outer dimension of the upper collar (230) and makes no contact therewith, and is further dimensioned such that the second engagement surface (132) of each lever arm will make contact with the an upper surface (232) of the collar when the first end of the lever am is displaced in upward direction;
the method comprising a step of:
• lowering the interface (100) relative to a receptacle having an opening of sufficient depth to accommodate a main body (225) of the tool, until the first engagement surface (131) of each lever arm makes contact with a surface (315) that surrounds the opening and causes each lever arm to pivot such that there is a displacement of the first end in upward direction, such that the second engagement surface (132) is displaced against the upper surface (232) of the tool and exerts a force on the collar (230) that disengages the at least one push fitting.

14. Method of claim 13, wherein the receptacle is a tool carrier (310) having a main recess (305) that is shaped to accommodate the body (225) of the dissection tool and an upper surface (315) surrounding the main recess, whereby the carrier upper surface includes a number of relatively higher portions and relatively lower portions (311, 312, 313) at least equal to the number of lever arms (130) of the tool interface, wherein the position of the relatively lower portions coincides with the position of the first engagement surface (131) of each lever arm when the interface is in the first angular position, and wherein prior to the step of lowering, the method further comprises:
• rotating the tool interface and attached tool about the vertical axis (150), free from load, to the second angular position in which the first engagement surface (131) of each lever arm is in alignment with the relatively higher portions of the carrier upper surface (315).

15. Method of claim 14, wherein prior to attachment, the dissection tool (200) is arranged in the tool carrier (310) and is attached to the interface (100) by:
• rotating the interface to the first angular position in which the position of the relatively lower portions (311, 312, 313) of the tool carrier coincides with the position of the first engagement surface (131) of each lever arm; and
• lowering the interface relative to the tool carrier by an amount sufficient to engage the at least one push fitting.

## Patentansprüche

1. Die Einrichtung zum Sezieren von biologischem Material aus einer Probe, die auf einem ebenen Substrat angeordnet ist, das eine Werkzeugschnittstelle (100) zum freigebbaren Anbringen eines Sezierwerkzeugs (200), das über mindestens einen Schiebeanschluss (120, 220) mit der Schnittstelle verbindbar und um eine vertikale Drehachse (150) drehbar ist, umfasst, das weiter eine Betätigungsvorrichtung (20) in fester Verbindung mit der Schnittstelle (100) umfasst, wobei die Betätigungsvorrichtung (20) in vertikaler Richtung bewegbar und zwischen einer ersten Winkelposition und einer zweiten Winkelposition um die vertikale Drehachse (150) drehbar ist;
**dadurch gekennzeichnet, dass** die Schnittstelle (100) weiter einen oder mehrere Hebelarme (130) umfasst, die jeweils über eine horizontale Schwenkachse (135) schwenkbar mit einem Gehäuse (110) der Schnittstelle verbunden sind, wodurch:
- jeder Hebelarm (130) an einer radial äußeren Stelle relativ zu dem mindestens einen Schiebeanschluss eingerichtet ist und ein erstes und ein zweites Ende mit einer jeweiligen ersten und zweiten Eingriffsoberfläche (131, 132) aufweist, wobei die erste Eingriffsoberfläche (131) in einem größeren radialen Abstand von der vertikalen Achse (150) eingerichtet ist als die zweite Eingriffsoberfläche (132); und
- das Werkzeug (200) einen oberen Bund (230) aufweist, der derart bemessen ist, dass, wenn das Werkzeug an der Schnittstelle (100) angebracht ist, die erste Eingriffsoberfläche (131) jedes Hebelarms (130) außerhalb einer Außenabmessung des oberen Bundes liegt und keinen Kontakt mit diesem hat, und weiter derart bemessen ist, dass die zweite Eingriffsoberfläche (132) jedes Hebelarms mit einer oberen Oberfläche (232) des Bundes in Kontakt kommt, wenn das erste Ende des Hebelarms nach oben verlagert wird,
und dadurch, dass
- die Einrichtung weiter einen Behälter (310) umfasst, der eine Öffnung (305) von ausreichender Tiefe aufweist, um einen Hauptkörper (225) des Werkzeugs aufzunehmen, und dazu konfiguriert ist, das Werkzeug durch Senken der Schnittstelle (100) in Richtung der Öffnung zu lösen, bis die erste Eingriffsoberfläche (131) jedes Hebelarms mit einer Oberfläche (315) in Kontakt kommt, die die Öffnung umgibt, und nach oben verlagert wird, wodurch die zweite Eingriffsoberfläche (132) eine Kraft auf den Bund (230), die den mindestens einen Schiebeanschluss ausrückt, ausübt.

2. Die Einrichtung nach Anspruch 1, wobei der Behälter ein Werkzeugträger (310) ist, der eine Hauptvertiefung (305) aufweist, die dazu geformt ist, den Hauptkörper (225) des Sezierwerkzeugs (200) aufzunehmen, und eine obere Oberfläche (315), die die Hauptvertiefung umgibt, wodurch:
- die obere Oberfläche des Trägers eine Anzahl relativ höherer Abschnitte und relativ niedrigerer Abschnitte (311, 312, 313) einschließt, die mindestens gleich der Anzahl der Hebelarme (130) der Werkzeugschnittstelle ist; und
- die Position der relativ niedrigeren Abschnitte mit der Position der ersten Eingriffsoberfläche (131) jedes Hebelarms übereinstimmt, wenn sich die Schnittstelle in der ersten Winkelposition befindet.

3. Die Einrichtung nach Anspruch 2, das eine Schale (300) umfasst, in der eine Vielzahl von Werkzeugträgern (310, 320) zum Halten einer Vielzahl von Sezierwerkzeugen eingebaut ist.

4. Die Einrichtung nach Anspruch 2 oder 3, wobei die Einrichtung weiter dazu konfiguriert ist, ein in einem Werkzeugträger (310) eingerichtetes Sezierwerkzeug (200) anzubringen, wenn sich die Schnittstelle in der ersten Winkelposition befindet, indem die Schnittstelle relativ zu dem Werkzeugträger (310) nach unten bewegt wird, bis der mindestens eine Schiebeanschluss eingreift, wodurch eine Tiefe der relativ unteren Abschnitte (311, 312, 313) derart ist, dass dieser Eingriff auftritt, ohne durch den Kontakt zwischen der ersten Eingriffsoberfläche (131) jedes Hebelarms (130) und dem Werkzeugträger (310) beeinträchtigt zu werden.

5. Die Einrichtung nach Anspruch 4, wobei die Einrichtung nach der Verwendung eines Werkzeugs weiter dazu konfiguriert ist, das Werkzeug zu dem Werkzeugträger (310) zurückzubringen und das Werkzeug von der Schnittstelle (100) zu lösen, durch:
- Drehen der Schnittstelle in die zweite Winkelposition, die eine Position ist, in der die erste Eingriffsoberfläche (131) jedes Hebelarms mit den relativ höheren Abschnitten der oberen Trägeroberfläche (315) ausgerichtet ist; und
- Senken des Werkzeugs in den Werkzeugträger (310) um eine Menge, die ausreicht, um die erste Eingriffsoberfläche (131) jedes Hebelarms mit den relativ höheren Abschnitten der oberen Oberfläche (315) des Trägers in Kontakt zu bringen und jeden Arm zum Schwenken zu veranlassen, so dass die Verlagerung der zweiten Eingriffsoberfläche (132) gegen die Werkzeugbundoberfläche (232) eine Kraft ausübt, die ausreicht, um den mindestens einen Schiebeanschluss auszurücken.

6. Die Einrichtung nach einem vorstehenden Anspruch, wobei der mindestens eine Schiebeanschluss mindestens teilweise durch eine Schnappverbindung zwischen der Schnittstelle (100) und dem Werkzeug (200) gebildet ist.

7. Die Einrichtung nach einem vorstehenden Anspruch, wobei:
- die Schnittstelle (100) einen oder mehrere konische Vorsprünge (120), die sich von einer Unterseite (115) des Gehäuses (110) erstrecken, umfasst,
- das Werkzeug (100) eine oder mehrere konische Vertiefungen (220) umfasst, die dazu geformt sind, den einen oder die mehreren konischen Vorsprünge aufzunehmen, und
- der mindestens eine Schiebeanschluss mindestens teilweise durch das Eingreifen eines oder mehrerer konischer Vorsprünge (120) in die entsprechenden konischen Vertiefungen (220) gebildet ist.

8. Die Einrichtung nach Anspruch 7, wobei der eine oder die mehreren konischen Vorsprünge (120) einen ringförmigen Grat umfassen und ein Eingang zu der einen oder den mehreren konischen Werkzeugvertiefungen (220) mit einer oder mehreren Schnappverbindungen (235) versehen ist, die in den ringförmigen Grat eingreifen, wenn ein Endteilabschnitt des konischen Vorsprungs in die entsprechende konische Vertiefung gedrückt wird.

9. Die Einrichtung nach Anspruch 7 oder 8, wobei die Schnittstelle (100) einen zentralen konischen Vorsprung (120) umfasst, der zum Eingreifen in eine zentrale konische Vertiefung (220) des Werkzeugs (200) angepasst ist.

10. Die Einrichtung nach einem vorstehenden Anspruch, wobei:
- die Schnittstelle (100) einen inneren Durchgang (105) umfasst, der sich in vertikaler Richtung durch die Schnittstelle erstreckt und mit einem Anschlussstück versehen ist, um eine luftdichte Verbindung mit einem Vakuumgenerator (50) zu ermöglichen,
- das Werkzeug (200) einen inneren Durchgang umfasst, der sich in vertikaler Richtung durch das Werkzeug erstreckt, und
- wenn das Werkzeug in angebrachtem Zustand ist, die inneren Durchgänge des Werkzeugs und der Schnittstelle luftdicht verbunden sind.

11. Die Einrichtung nach einem vorstehenden Anspruch, wobei:
die Schnittstelle zwei oder mehr Hebelarme umfasst, die in gleichmäßigem Winkelabstand um die vertikale Achse (150) eingerichtet sind.

12. Die Einrichtung nach einem er vorstehenden Anspruch, wobei in einer Ruheposition die erste Eingriffsoberfläche (131) jedes Hebelarms in einer ersten horizontalen Ebene liegt und die entsprechende zweite Eingriffsoberfläche (132) in einer zweiten horizontalen Ebene liegt, die höher ist als die erste horizontale Ebene.

13. Das Verfahren zum Lösen eines Sezierwerkzeugs (200) von einer Werkzeugschnittstelle (100) einer Seziereinrichtung, wodurch das Sezierwerkzeug über mindestens einen Schiebeanschluss an der Werkzeugschnittstelle angebracht wird, und wobei:
- die Einrichtung eine Betätigungsvorrichtung (20) in fester Verbindung mit der Werkzeugschnittstelle (100) umfasst, wobei die Betätigungsvorrichtung (20) in vertikaler Richtung bewegbar ist und zwischen einer ersten Winkelposition und einer zweiten Winkelposition um eine vertikale Drehachse (150) drehbar ist;
- die Werkzeugschnittstelle (100) einen oder mehrere Hebelarme (130) umfasst, die jeweils über eine horizontale Schwenkachse (135) schwenkbar mit einem Gehäuse (110) der Schnittstelle verbunden sind,
- jeder Hebelarm (130) an einer radial äußeren Stelle relativ zu dem mindestens einen Schiebeanschluss eingerichtet ist und ein erstes und ein zweites Ende mit einer jeweiligen ersten und zweiten Eingriffsoberfläche (131, 132) aufweist, wobei die erste Eingriffsoberfläche (131) in einem größeren radialen Abstand von der vertikalen Achse (150) eingerichtet ist als die zweite Eingriffsoberfläche (132);
- das Werkzeug (200) einen oberen Bund aufweist, der derart bemessen ist, dass, wenn das Werkzeug an der Schnittstelle (100) angebracht ist, die erste Eingriffsoberfläche (131) jedes Hebelarms (130) außerhalb einer Außenabmessung des oberen Bundes (230) liegt und keinen Kontakt mit diesem hat, und weiter derart bemessen ist, dass die zweite Eingriffsoberfläche (132) jedes Hebelarms mit der oberen Oberfläche (232) des Bundes in Kontakt kommt, wenn das erste Ende des Hebelarms nach oben verlagert wird,
wobei das Verfahren einen Schritt umfasst:
- Senken der Schnittstelle (100) relativ zu einem Behälter, der eine Öffnung mit ausreichender Tiefe aufweist, um einen Hauptkörper (225) des Werkzeugs aufzunehmen, bis die erste Eingriffsoberfläche (131) jedes Hebelarms mit einer Oberfläche (315) in Kontakt kommt, die die Öffnung umgibt, und eine Verlagerung des ersten Endes nach oben verursacht, so dass die zweite Eingriffsoberfläche (132) eine Kraft auf den Bund (230) ausübt, die den mindestens einen Schiebeanschluss ausrückt.

14. Das Verfahren nach Anspruch 13, wobei der Behälter ein Werkzeugträger (310) ist, der eine Hauptvertiefung (305) aufweist, die dazu geformt ist, den Körper (225) des Sezierwerkzeugs aufzunehmen, und eine obere Oberfläche (315), die die Hauptvertiefung umgibt, wodurch die obere Oberfläche des Trägers eine Anzahl relativ höherer Abschnitte und relativ niedrigerer Abschnitte (311, 312, 313) einschließt, die mindestens gleich der Anzahl der Hebelarme (130) der Werkzeugschnittstelle ist, wobei die Position der relativ niedrigeren Abschnitte mit der Position der ersten Eingriffsoberfläche (131) jedes Hebelarms übereinstimmt, wenn sich die Schnittstelle in der ersten Winkelposition befindet, und wobei das Verfahren vor dem Schritt des Senkens weiter umfasst:
- Drehen der Werkzeugschnittstelle und des daran angebrachten Werkzeugs um die vertikale Achse (150), lastfrei, in die zweite Winkelposition, in der die erste Eingriffsoberfläche (131) jedes Hebelarms mit den relativ höheren Abschnitten der oberen Trägeroberfläche (315) ausgerichtet ist.

15. Das Verfahren nach Anspruch 14, wobei das Sezierwerkzeug (200) vor der Befestigung in dem Werkzeugträger (310) eingerichtet und an der Schnittstelle (100) angebracht wird durch:
- Drehen der Schnittstelle in die erste Winkelposition, in der die Position der relativ unteren Abschnitte (311, 312, 313) des Werkzeugträgers mit der Position der ersten Eingriffsoberfläche (131) jedes Hebelarms übereinstimmt, und
- Senken der Schnittstelle relativ zu dem Werkzeugträger um eine Menge, die ausreicht, um den mindestens einen Schiebeanschluss einzurücken.

## Revendications

1. Un appareil de dissection de matière biologique à partir d'un échantillon agencé sur un substrat plan, comprenant une interface d'outil (100) pour la fixation amovible d'un outil de dissection (200) qui peut être lié à l'interface via au moins un raccord à pression (120, 220) et qui peut tourner autour d'un axe de rotation vertical (150), comprenant en outre un actionneur (20) en liaison fixe avec l'interface (100), dans lequel l'actionneur (20) est mobile dans la direction verticale et peut tourner entre une première position angulaire et une seconde position angulaire autour de l'axe de rotation vertical (150) ;
**caractérisé en ce que** l'interface (100) comprend en outre un ou plusieurs bras de levier (130) chacun relié de manière pivotante à un boîtier (110) de l'interface via un axe de pivotement horizontal (135), de sorte que :
- chaque bras de levier (130) est agencé à un emplacement radialement extérieur par rapport à l'au moins un raccord à pression et comporte des première et seconde extrémités avec des première et seconde surfaces d'engagement (131, 132) respectives, la première surface d'engagement (131) étant agencée à une distance radiale plus grande de l'axe vertical (150) que la seconde surface d'engagement (132) ; et
- l'outil (200) comporte un collier supérieur (230) qui est dimensionné de telle sorte que, lorsque l'outil est fixé à l'interface (100), la première surface d'engagement (131) de chaque bras de levier (130) se trouve à l'extérieur d'une dimension extérieure du collier supérieur et n'entre pas en contact avec celui-ci, et est en outre dimensionné de telle sorte que la seconde surface d'engagement (132) de chaque bras de levier entre en contact avec une surface supérieure (232) du collier lorsque la première extrémité du bras de levier est déplacée vers le haut ;
et **en ce que**
- l'appareil comprend en outre un réceptacle (310) présentant une ouverture (305) d'une profondeur suffisante pour accueillir un corps principal (225) de l'outil, et est configuré pour détacher l'outil en abaissant l'interface (100) vers l'ouverture jusqu'à ce que la première surface d'engagement (131) de chaque bras de levier entre en contact avec une surface (315) qui entoure l'ouverture et soit déplacée vers le haut, amenant la seconde surface d'engagement (132) à exercer une force sur le collier (230) qui désengage le ou les raccords à pression.

2. L'appareil selon la revendication 1, dans lequel le réceptacle est un porte-outil (310) comportant un évidement principal (305) qui est formé pour accueillir le corps principal (225) de l'outil de dissection (200) et une surface supérieure (315) entourant l'évidement principal, de sorte que :
- la surface supérieure du support comprenne un nombre de parties relativement plus hautes et de parties relativement plus basses (311, 312, 313) au moins égal au nombre de bras de levier (130) de l'interface d'outil ; et
- la position des parties relativement plus basses coïncide avec la position de la première surface d'engagement (131) de chaque bras de levier lorsque l'interface est dans la première position angulaire.

3. L'appareil selon la revendication 2, comprenant un plateau (300) dans lequel une pluralité de porte-outils (310, 320) sont incorporés pour contenir une pluralité d'outils de dissection.

4. L'appareil selon la revendication 2 ou 3, dans lequel l'appareil est en outre configuré pour fixer un outil de dissection (200) agencé dans un porte-outil (310) lorsque l'interface est dans la première position angulaire en déplaçant l'interface vers le bas par rapport au porte-outil (310) jusqu'à ce que le ou les raccords à pression s'engagent, de sorte qu'une profondeur des parties relativement plus basses (311, 312, 313) soit telle que cet engagement se produise sans être affecté par le contact entre la première surface d'engagement (131) de chaque bras de levier (130) et le porte-outil (310).

5. L'appareil selon la revendication 4, dans lequel, après utilisation d'un outil, l'appareil est en outre configuré pour renvoyer l'outil au porte-d'outil (310) et détacher l'outil de l'interface (100) en :
- faisant tourner l'interface vers la seconde position angulaire, qui est une position dans laquelle le premier engagement de surface (131) de chaque bras de levier est aligné sur les parties relativement plus hautes de la surface supérieure de support (315) ; et
- abaissant l'outil dans le porte-outil (310) d'une quantité suffisante pour mettre la première surface d'engagement (131) de chaque bras de levier en contact avec les parties relativement plus hautes de la surface supérieure de support (315) et provoquer le pivotement de chaque bras, de telle sorte qu'un déplacement de la seconde surface d'engagement (132) contre la surface de collier d'outil (232) exerce une force suffisante pour désengager le ou les raccords à pression.

6. L'appareil selon une quelconque revendication précédente, dans lequel le ou les raccords à pression sont au moins en partie formés par une liaison à encliquetage entre l'interface (100) et l'outil (200).

7. L'appareil selon une quelconque revendication précédente, dans lequel :
- l'interface (100) comprend une ou plusieurs saillies coniques (120) qui s'étendent à partir d'une face inférieure (115) du boîtier (110) ;
- l'outil (100) comprend un ou plusieurs évidements coniques (220) qui sont formés pour recevoir la ou les saillies coniques, et
- le ou les raccords à pression sont au moins en partie formés par la ou les saillies coniques (120) s'engageant dans les évidements coniques (220) correspondants.

8. L'appareil selon la revendication 7, dans lequel la ou les saillies coniques (120) comprennent une crête annulaire et une entrée vers le ou les évidements coniques d'outil (220) est pourvue d'un ou plusieurs joints à encliquetage (235) qui s'engagent avec la crête annulaire lorsqu'une section d'extrémité de la saillie conique est poussée dans l'évidement conique correspondant.

9. L'appareil selon la revendication 7 ou 8, dans lequel l'interface (100) comprend une saillie conique centrale (120) qui est adaptée pour s'engager dans un évidement conique central (220) de l'outil (200).

10. L'appareil selon une quelconque revendication précédente, dans lequel :
- l'interface (100) comprend un passage interne (105) qui s'étend à travers l'interface dans la direction verticale et est pourvu d'un raccord pour permettre une liaison étanche à l'air avec un générateur de vide (50),
- l'outil (200) comprend un passage interne qui s'étend à travers l'outil dans la direction verticale, et
- lorsque l'outil est en état fixé, lesdits passages internes de l'outil et de l'interface sont reliés de manière étanche.

11. L'appareil selon une quelconque revendication précédente, dans lequel :
l'interface comprend deux ou plusieurs bras de levier agencés avec un espacement angulaire régulier autour de l'axe vertical (150).

12. L'appareil selon une quelconque revendication précédente, dans lequel, dans une position de repos, la première surface d'engagement (131) de chaque bras de levier se trouve dans un premier plan horizontal, et la seconde surface d'engagement (132) correspondante se trouve dans un second plan horizontal qui est plus haut que le premier plan horizontal.

13. Un procédé de détachement d'un outil de dissection (200) d'une interface d'outil (100) d'un appareil de dissection, l'outil de dissection étant fixé à l'interface d'outil via au moins un raccord à pression, et dans lequel :
- l'appareil comprend un actionneur (20) en liaison fixe avec l'interface d'outil (100), dans lequel l'actionneur (20) est mobile dans la direction verticale et peut tourner entre une première position angulaire et une seconde position angulaire autour d'un axe de rotation vertical (150) ;
- l'interface d'outil (100) comprend un ou plusieurs bras de levier (130) chacun relié de manière pivotante à un boîtier (110) de l'interface via un axe de pivotement horizontal (135) ;
- chaque bras de levier (130) est agencé à un emplacement radialement extérieur par rapport à l'au moins un raccord à pression et comporte des première et seconde extrémités avec des première et seconde surfaces d'engagement (131, 132) respectives, la première surface d'engagement (131) étant agencée à une distance radiale plus grande de l'axe vertical (150) que la seconde surface d'engagement (132) ;
- l'outil (200) comporte un collier supérieur qui est dimensionné de telle sorte que, lorsque l'outil est fixé à l'interface (100), la première surface d'engagement (131) de chaque bras de levier (130) se trouve à l'extérieur d'une dimension extérieure du collier supérieur (230) et n'entre pas en contact avec celui-ci, et qui est en outre dimensionné de telle sorte que la seconde surface d'engagement (132) de chaque bras de levier entre en contact avec la surface supérieure (232) du collier lorsque la première extrémité du bras de levier est déplacée vers le haut ;
le procédé comprenant l'étape suivante :
- l'abaissement de l'interface (100) par rapport à un réceptacle présentant une ouverture de profondeur suffisante pour accueillir un corps principal (225) de l'outil, jusqu'à ce que la première surface d'engagement (131) de chaque bras de levier entre en contact avec une surface (315) qui entoure l'ouverture et provoque le déplacement de la première extrémité vers le haut, de telle sorte que la seconde surface d'engagement (132) exerce une force sur le collier (230) qui désengage le ou les raccords à pression.

14. Le procédé selon la revendication 13, dans lequel le réceptacle est un porte-outil (310) présentant un évidement principal (305) qui est formé pour accueillir le corps (225) de l'outil de dissection et une surface supérieure (315) entourant l'évidement principal, de telle sorte que la surface supérieure de support comprenne un nombre de parties relativement plus hautes et de parties relativement plus basses (311, 312, 313) au moins égal au nombre de bras de levier (130) de l'interface d'outil, dans lequel la position des parties relativement plus basses coïncide avec la position de la première surface d'engagement (131) de chaque bras de levier lorsque l'interface est dans la première position angulaire, et dans lequel, avant l'étape d'abaissement, le procédé comprend en outre :
- la rotation de l'interface d'outil et de l'outil fixé autour de l'axe vertical (150), sans charge, jusqu'à la seconde position angulaire dans laquelle la première surface d'engagement (131) de chaque bras de levier est alignée sur les parties relativement plus hautes de la surface supérieure de support (315).

15. Le procédé selon la revendication 14, dans lequel, avant la fixation, l'outil de dissection (200) est agencé dans le porte-outil (310) et est fixé à l'interface (100) par :
- la rotation de l'interface jusqu'à la première position angulaire dans laquelle la position des parties relativement plus basses (311, 312, 313) du porte-outil coïncide avec la position de la première surface d'engagement (131) de chaque bras de levier ; et
- l'abaissement de l'interface par rapport au porte-outil d'une quantité suffisante pour engager au moins un raccord à pression.
